# EUROPÄISCHE PATENTSCHRIFT

(11) **EP 3 343 303 B1**
(45) Veröffentlichungstag und Bekanntmachung des Hinweises auf die Patenterteilung: **26.06.2019**
(21) Anmeldenummer: 16207274.8
(22) Anmeldetag: 29.12.2016
(51) Int. Cl.: G05B 19/418, H04L 1/00, H04L 12/00

(54) **FUNK-KOMMUNIKATIONSSYSTEM FÜR EIN INDUSTRIELLES AUTOMATISIERUNGSSYSTEM, VERFAHREN ZU DESSEN BETRIEB**
RADIO COMMUNICATION SYSTEM AND METHOD FOR AN INDUSTRIAL AUTOMATION SYSTEM
SYSTÈME DE RADIOCOMMUNICATION POUR UN SYSTÈME D'AUTOMATISATION INDUSTRIELLE ET SON PROCÉDÉ DE FONCTIONNEMENT

(43) Veröffentlichungstag der Anmeldung: 04.07.2018
(73) Patentinhaber: Siemens Aktiengesellschaft, 80333 München (DE)
(72) Erfinder: Müller, Jörg, 76351 Linkenheim (DE)

(56) Entgegenhaltungen:
- EP-A1- 2 712 124
- EP-A1- 3 035 606
- WO-A1-2010/057655
- MARKUS RENTSCHLER ET AL: "The Parallel Redundancy Protocol for industrial IP networks", INDUSTRIAL TECHNOLOGY (ICIT), 2013 IEEE INTERNATIONAL CONFERENCE ON, IEEE, 25. Februar 2013 (2013-02-25), Seiten 1404-1409, XP032397686, DOI: 10.1109/ICIT.2013.6505877 ISBN: 978-1-4673-4567-5

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung. Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Um Ausfälle von Kommunikationsverbindungen oder -geräten kompensieren zu können, sind Kommunikationsprotokolle zur stoßfreien redundanten Übertragung von Nachrichten in hochverfügbaren industriellen Kommunikationsnetzen entwickelt worden. Hierzu zählen High-availability Seamless Redundancy (HSR) und Parallel Redundancy Protocol (PRP), die im Standard IEC 62439-3 definiert sind und bei Netzstörungen eine umschaltstoßfreie Übertragung von Nachrichten mit äußerst geringen Erholungszeiten ermöglichen. Entsprechend High-availability Seamless Redundancy und Parallel Redundancy Protocol wird jede Nachricht von einem sendenden Kommunikationsgerät dupliziert und auf zwei verschiedenen Wegen zu einem Empfänger geschickt. Durch ein empfängerseitiges Kommunikationsgerät werden Duplikate darstellende redundante Nachrichten aus einem empfangenen Datenstrom ausgefiltert.

Im Standard IEC 62439-3 sind für das Parallel Redundancy Protocol (PRP) aufgrund verhältnismäßig langer Latenzlaufzeiten in Drahtlos-Kommunikationssystemen und eines dadurch bedingten nicht-deterministischen Übertragungsverhaltens bislang ausschließlich kabelgebundene Übertragungsstrecken vorgeschrieben. In "Towards a Reliable Parallel Redundant WLAN Black Channel", Markus Rentschler, Per Laukemann, IEEE 2012 wird eine Eignung von WLAN-Übertragungsstrecken in PRP-Kommunikationsnetzen untersucht. Mittels paralleler Anwendung unterschiedlicher Diversitätstechniken für beispielsweise Raum, Zeit und Frequenz können in WLAN-Kommunikationsnetzen Auswirkungen von stochastischem Kanalschwund hinreichend kompensiert werden.

Aus EP 2 712 124 A1 ist ein redundant betriebenes industrielles Kommunikationssystem mit redundant an ein industrielles Kommunikationsnetz angebundenen Kommunikationsgeräten bekannt, bei dem eine Nachrichtenübermittlung zumindest abschnittsweise kabellos erfolgt. Im industriellen Kommunikationsnetz ist eine Mehrzahl von Puffer-Speichereinheiten für an einem Netzknoten kabelgebunden empfangene und von diesem kabellos zu sendende Nachrichtenelemente vorgesehen. Bei Überschreiten einer maximalen Puffer-Größe wird ein ältestes in der jeweiligen Puffer-Speichereinheit befindliches Nachrichtenelement gelöscht. Bis zu einem Überschreiten der maximalen Puffer-Größe wird das älteste Nachrichtenelement als nächstes kabellos zu sendendes Nachrichtenelement ausgewählt.

In DE 10 2012 209509 A1 ist eine Vorrichtung zur sicheren Datenübertragung zwischen einem mobilen Teilnehmer, der zumindest eine Übertragungsvorrichtung aufweist, und einem stationären Empfänger beschrieben. Dabei kann der mobile Teilnehmer zwischen mehreren Funkzellen wechseln. Jede Funkzelle weist zumindest eine Übertragungsvorrichtung auf, die drahtgebunden an zumindest ein Netzwerk angeschlossen ist. Der stationäre Empfänger ist ebenfalls drahtgebunden an das zumindest eine Netzwerk angeschlossen. Sowohl die drahtlose Übertragung zwischen dem mobilen Teilnehmer und seiner jeweils zugehörigen Übertragungsvorrichtung als auch die drahtgebundene Datenübertragung zwischen der Übertragungsvorrichtung und dem zumindest einen zugehörigen Netzwerk erfolgt redundant. Der stationäre Empfänger ist redundant und drahtgebunden an das Netzwerk angeschlossen.

EP 3 211 838 B1 betrifft ein redundant betreibbares industrielles Kommunikationssystem, bei dem ein erstes Kommunikationsgerät mit Redundanzfunktion über einen ersten und zweiten Kommunikationsnetzanschluss redundant an einen ersten Switch angeschlossen ist. Dementsprechend ist ein zweites Kommunikationsgerät mit Redundanzfunktion über einen ersten und zweiten Kommunikationsnetzanschluss redundant an einen zweiten Switch angeschlossen. Vom ersten Kommunikationsnetzanschluss des ersten und des zweiten Kommunikationsgeräts an den jeweiligen Switch übermittelte Datenrahmen werden einem ersten virtuellen lokalen Netz zugeordnet, während vom zweiten Kommunikationsnetzanschluss des ersten und des zweiten Kommunikationsgeräts an den jeweiligen Switch übermittelte Datenrahmen einem zweiten virtuellen lokalen Netz zugeordnet werden.

Dem ersten virtuellen lokalen Netz zugeordnete Datenrahmen werden mittels einer jeweiligen ersten Funk-Transceiver-Station über ein erstes Funknetz gesendet, während dem zweiten virtuellen lokalen Netz zugeordnete Datenrahmen mittels einer jeweiligen zweiten Funk-Transceiver-Station über ein zweites Funknetz gesendet werden.

Aus EP 3 211 962 B1 ist ein Funk-Kommunikationssystem für ein industrielles Automatisierungssystem bekannt, bei dem zumindest ein erstes und ein zweites Kommunikationsgerät redundant an ein industrielles Kommunikationsnetz angebunden sind. Das erste und das zweite Kommunikationsgerät sind jeweils über ihren ersten und über ihren Kommunikationsnetzanschluss mittel- oder unmittelbar mit einer jeweiligen ersten und mit einer jeweiligen zweiten Funk-Transceiver-Station verbunden. Die ersten und zweiten Funk-Transceiver-Stationen legen eine Reihenfolge für innerhalb eines vorgegebenen Zeitintervalls zu sendende Datenrahmen anhand den zu sendenden Datenrahmen zugeordneter Ziel-MAC-Adressen fest. Die Reihenfolge innerhalb an eine ausgewählte Ziel-MAC-Adresse zu sendender Datenrahmen wird durch ihre Eingangsreihenfolge festgelegt. Außerdem sind die ersten und zweiten Funk-Transceiver-Stationen koordinieren ihre Reihenfolgen für zu sendende Datenrahmen derart, dass beide Funk-Transceiver-Stationen Datenrahmen stets an unterschiedliche Ziel-MAC-Adressen senden.

In Markus Rentschler und Holger Heine "The Parallel Redundancy Protocol for industrial IP networks", IEEE INTERNATIONAL CONFERENCE ON INDUSTRIAL TECHNOLOGY (ICIT) 2013, S. 1404-1409, ISBN 978-1-4673-4567-5 ist ein Verfahren zur redundanten Datenübermittlung mittels PRP beschrieben, bei dem PRP-Duplikate-Identifizierungsinformationen über Routergrenzen hinweg erhalten bleiben. Hierzu wird eine Quell-Adresse in einem RCT-Feld eines PRP-Trailers gespeichert. Auf diese Weise gehen Quell-Adressen bei Netzübergängen nicht verloren.

Bei VLAN-basierten Verfahren zur Übermittlung von PRP-Datenrahmen über WLAN-Transceiver-Stationen, die an einen eingeschränkt VLAN-fähigen Switch angeschlossen sind, kann eine zuverlässige Weiterleitung von PRP-Datenrahmen mit identischer Quell- und Zieladresse innerhalb eines solchen Switchs trotz Zuordnung zu unterschiedlichen VLANs problematisch sein. Derartige Probleme lassen sich vielfach nur durch zwei komplett voneinander getrennte Teilnetze lösen. Auch bei Lösungen mit Funkmodulen, die über einen gemeinsamen WLAN-Controller angesteuert werden, ist für VLAN-basierte Verfahren zur Übermittlung von PRP-Datenrahmen stets zu gewährleisten, dass MAC-Adressen nicht VLAN-übergreifend gelernt werden.

Der vorliegenden Erfindung liegt die Aufgabe zugrunde, ein ausfallsicheres Funk-Kommunikationssystem für ein industrielles Automatisierungssystem zu schaffen, das sich einfach in bestehende Kommunikationsnetze integrieren lässt und eine effiziente Funk-Ressourcennutzung ermöglicht, und ein Verfahren zu dessen Betrieb sowie geeignete Systemkomponenten anzugeben.

Diese Aufgabe wird erfindungsgemäß durch ein Funk-Kommunikationssystem mit den in Anspruch 1 angegebenen Merkmalen und durch ein Verfahren mit den in Anspruch 11 angegebenen Merkmalen gelöst. Vorteilhafte Weiterbildungen der vorliegenden Erfindung sind in den abhängigen Ansprüchen angegeben.

Das erfindungsgemäße Funk-Kommunikationssystem umfasst zumindest ein erstes und ein zweites redundant an ein industrielles Kommunikationsnetz angebundenes Kommunikationsgerät mit jeweils zumindest einem ersten und einem zweiten Kommunikationsnetzanschluss und einer mit dem ersten und zweiten Kommunikationsnetzanschluss verbundenen Signalverarbeitungseinheit. Die Signalverarbeitungseinheit weist eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen auf. Die Redundanzbehandlungseinheit ist für eine Detektion empfangener redundanter Datenrahmen ausgestaltet und eingerichtet. Außerdem ist zumindest ein Netzinfrastrukturgerät mit einer Mehrzahl von Kommunikationsnetzanschlüssen und einem die Kommunikationsnetzanschlüsse miteinander verbindenden Koppelelement vorgesehen.

Erfindungsgemäß ist das erste Kommunikationsgerät über seinen ersten und über seinen zweiten Kommunikationsnetzanschluss mit einer Serialisierungseinheit verbunden, die über genau eine Leitungsverbindung an das Netzinfrastrukturgerät angeschlossen ist. An das Netzinfrastrukturgerät sind eine erste und eine zweite Funk-Basisstation angeschlossen. Das zweite Kommunikationsgerät ist über seinen ersten und über seinen zweiten Kommunikationsnetzanschluss mittel- oder unmittelbar mit einer ersten und einer zweiten Funk-Teilnehmerstation verbunden. Die erste Funk-Teilnehmerstation ist über eine erste Funkverbindung mit der ersten Funk-Basisstation, während die zweite Funk-Teilnehmerstation über eine zweite Funkverbindung mit der zweiten Funk-Basisstation verbunden ist. Die Funk-Teilnehmerstationen und die Funk-Basisstationen können beispielsweise einem Wireless Local Area Network, einem WiMAX-, einem UMTS-, einem LTE-Mobilfunknetz oder einem sonstigen Mobilfunknetz zugeordnet sein.

Darüber hinaus ist die Serialisierungseinheit erfindungsgemäß dafür ausgestaltet und eingerichtet, Ziel-Adressen in über den ersten Kommunikationsnetzanschluss des ersten Kommunikationsgeräts übermittelten Datenrahmen jeweils durch eine Adresse der ersten Funk-Teilnehmerstation zu ersetzen. Zusätzlich ist die Serialisierungseinheit erfindungsgemäß dafür ausgestaltet und eingerichtet, Ziel-Adressen in über den zweiten Kommunikationsnetzanschluss des ersten Kommunikationsgeräts übermittelten Datenrahmen jeweils durch eine Adresse der zweiten Funk-Teilnehmerstation zu ersetzen. Die erste Funk-Teilnehmerstation ist dafür ausgestaltet und eingerichtet, mit ihrer Adresse übereinstimmende Ziel-Adressen in über die erste Funkverbindung übermittelten Datenrahmen jeweils durch in der Serialisierungseinheit ersetzte ursprüngliche Ziel-Adressen zu ersetzen. In entsprechender Weise ist die zweite Funk-Teilnehmerstation dafür ausgestaltet und eingerichtet, mit ihrer Adresse übereinstimmende Ziel-Adressen in über die zweite Funkverbindung übermittelten Datenrahmen jeweils durch in der Serialisierungseinheit ersetzte ursprüngliche Ziel-Adressen zu ersetzen. Auf diese Weise ermöglicht die vorliegende Erfindung eine Übermittlung von PRP-Datenrahmen über WLAN-Übertragungsstrecken, ohne dass hierzu komplett voneinander unabhängige reale oder virtuelle Teilnetze zwischen dem ersten und dem zweiten Kommunikationsgerät erforderlich sind.

Entsprechend einer bevorzugten Ausgestaltung der vorliegenden Erfindung ist die Serialisierungseinheit dafür ausgestaltet und eingerichtet, ersetzte ursprüngliche Ziel-Adressen in über den ersten und zweiten Kommunikationsnetzanschluss des ersten Kommunikationsgeräts übermittelten Datenrahmen als Zusatzinformation in einen vorgegebenen Bereich des jeweiligen Datenrahmens einzufügen. Darüber hinaus können die erste und die zweite Funk-Teilnehmerstation dafür ausgestaltet und eingerichtet sein, mit ihrer Adresse übereinstimmende Ziel-Adressen in über die erste und zweite Funkverbindung übermittelten Datenrahmen jeweils entsprechend der Zusatzinformation im vorgegebenen Bereich des jeweiligen Datenrahmens durch die ursprüngliche Ziel-Adresse zu ersetzen. Dies ermöglicht eine besonders zuverlässige Ersetzung und Wiederherstellung der ursprünglichen Ziel-Adressen. Das erste Kommunikationsgerät, das zweite Kommunikationsgerät, das Netzinfrastrukturgerät bzw. die Serialisierungseinheit können beispielsweise Software-implementierte bzw. virtualisierte Funktionseinheiten einer rechnerbasierten Vorrichtung sein.

Vorzugsweise sind zueinander redundante Datenrahmen durch eine einheitliche Sequenznummer gekennzeichnet. Dabei sind die Signalverarbeitungseinheiten des ersten und des zweiten Kommunikationsgeräts für eine Vergabe von Sequenznummern an redundant zu übermittelnde Datenrahmen ausgestaltet und eingerichtet. Insbesondere kann eine Übertragung redundant zu übermittelnder Datenrahmen entsprechend Parallel Redundancy Protocol erfolgen. In diesem Fall ist die Serialisierungseinheit vorteilhafterweise dafür ausgestaltet und eingerichtet ist, ersetzte ursprüngliche Ziel-Adressen in über den ersten und zweiten Kommunikationsnetzanschluss des ersten Kommunikationsgeräts übermittelten Datenrahmen als Zusatzinformation in einen PRP-Trailer des jeweiligen Datenrahmens einzufügen. Dementsprechend können die erste und die zweite Funk-Teilnehmerstation dafür ausgestaltet und eingerichtet sein, mit ihrer Adresse übereinstimmende Ziel-Adressen in über die erste und zweite Funkverbindung übermittelten Datenrahmen jeweils entsprechend der Zusatzinformation im PRP-Trailer des jeweiligen Datenrahmens durch die ursprüngliche Ziel-Adresse zu ersetzen. Das erste und zweite Kommunikationsgerät können beispielsweise eine PRP-Redbox sein. Über eine solche PRP-Redbox kann jeweils zumindest ein einfach angebundenes Kommunikationsgerät mit dem industriellen Kommunikationsnetz verbunden sein.

Entsprechend dem erfindungsgemäßen Verfahren zum Betrieb eines Funk-Kommunikationssystems für ein industrielles Automatisierungssystem werden zumindest ein erstes und ein zweites Kommunikationsgerät redundant an ein industrielles Kommunikationsnetz angebunden. Dabei weisen das erste und zweite Kommunikationsgerät jeweils zumindest einen ersten und einen zweiten Kommunikationsnetzanschluss und eine mit dem ersten und zweiten Kommunikationsnetzanschluss verbundene Signalverarbeitungseinheit auf. Die Signalverarbeitungseinheit leitet zu sendende Datenrahmen parallel an beide Kommunikationsnetzanschlüsse weiter und detektiert von beiden Kommunikationsnetzanschlüssen empfangene redundante Datenrahmen. Außerdem ist zumindest ein Netzinfrastrukturgerät mit einer Mehrzahl von Kommunikationsnetzanschlüssen und einem die Kommunikationsnetzanschlüsse miteinander verbindenden Koppelelement vorgesehen.

Erfindungsgemäß ist das erste Kommunikationsgerät über seinen ersten und über seinen zweiten Kommunikationsnetzanschluss mit einer Serialisierungseinheit verbunden, die über genau eine Leitungsverbindung an das Netzinfrastrukturgerät angeschlossen ist. An das Netzinfrastrukturgerät sind eine erste und eine zweite Funk-Basisstation angeschlossen. Das zweite Kommunikationsgerät ist über seinen ersten und über seinen zweiten Kommunikationsnetzanschluss mittel- oder unmittelbar mit einer ersten und einer zweiten Funk-Teilnehmerstation verbunden. Die erste Funk-Teilnehmerstation ist über eine erste Funkverbindung mit der ersten Funk-Basisstation verbunden. Dementsprechend ist die zweite Funk-Teilnehmerstation über eine zweite Funkverbindung mit der zweiten Funk-Basisstation verbunden. Die Serialisierungseinheit ersetzt Ziel-Adressen in über den ersten Kommunikationsnetzanschluss des ersten Kommunikationsgeräts übermittelten Datenrahmen jeweils durch eine Adresse der ersten Funk-Teilnehmerstation. Außerdem ersetzt die Serialisierungseinheit Ziel-Adressen in über den zweiten Kommunikationsnetzanschluss des ersten Kommunikationsgeräts übermittelten Datenrahmen jeweils durch eine Adresse der zweiten Funk-Teilnehmerstation. Dementsprechend ersetzt die erste Funk-Teilnehmerstation mit ihrer Adresse übereinstimmende Ziel-Adressen in über die erste Funkverbindung übermittelten Datenrahmen jeweils durch in der Serialisierungseinheit ersetzte ursprüngliche Ziel-Adressen. Analog dazu ersetzt die zweite Funk-Teilnehmerstation mit ihrer Adresse übereinstimmende Ziel-Adressen in über die zweite Funkverbindung übermittelten Datenrahmen jeweils durch in der Serialisierungseinheit ersetzte ursprüngliche Ziel-Adressen.

Die vorliegende Erfindung wird nachfolgend an einem Ausführungsbeispiel anhand der Zeichnung näher erläutert. Es zeigt
- Figur 1: einen ersten Teil eines Funk-Kommunikationssystems für ein industrielles Automatisierungssystem mit einer ersten PRP-Redbox, einem Switch und mehreren an den Switch angeschlossenen WLAN-Basisstationen,
- Figur 2: einen zweiten Teil des Funk-Kommunikationssystems mit einer zweiten PRP-Redbox und mehreren an die zweite PRP-Redbox angeschlossenen WLAN-Teilnehmerstationen.

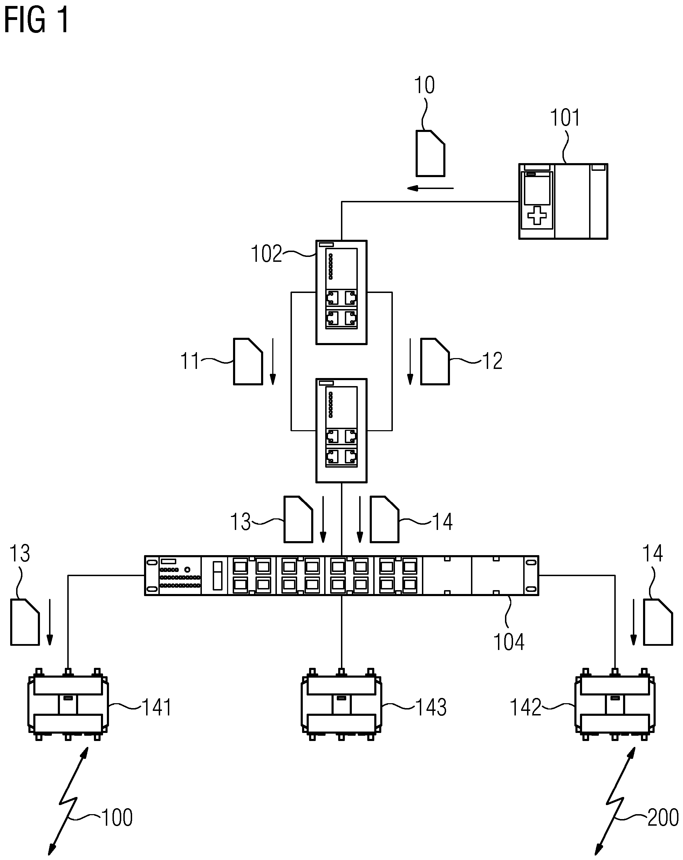

Der in Figur 1 dargestellte erste Teil eines Funk-Kommunikationssystems für ein industrielles Automatisierungssystem umfasst eine erste PRP-Redbox 102, die zumindest 3 Kommunikationsnetzanschlüsse aufweist. Redundant zu übermittelnde Datenrahmen werden im vorliegenden Ausführungsbeispiel entsprechend Parallel Redundancy Protocol (PRP) übertragen. Über einen ersten und zweiten Kommunikationsnetzanschluss ist die erste PRP-Redbox 102 redundant an eine Serialisierungseinheit 103 angeschlossen. Die Serialisierungseinheit 103 ist außerdem über genau eine Leitungsverbindung an einen Switch 104 angeschlossen. Der Switch 104 umfasst eine Mehrzahl von Kommunikationsnetzanschlüssen und ein die Kommunikationsnetzanschlüsse miteinander verbindendes Koppelelement. Ein solches Koppelelement kann beispielsweise durch einen Hochgeschwindigkeitsbus bzw. einen Backplane Switch mit zugeordnetem Controller realisiert sein.

An einen Interlink-Port, der einen dritten Kommunikationsnetzanschluss der ersten PRP-Redbox 102 darstellt, ist im vorliegenden Ausführungsbeispiel auf Leitsystemebene ein SCADA-System 101 (Supervisory Control and Data Acquisition) angeschlossen. Darüber hinaus umfasst der erste Teil des Funk-Kommunikationssystems an den Switch 104 angeschlossene WLAN-Basisstationen 141-144. Anstelle von WLAN-Basisstationen können grundsätzlich auch Funk-Basisstationen-Stationen für ein WiMAX-, ein UMTS-, ein LTE-Mobilfunknetz oder ein sonstiges Mobilfunknetz verwendet werden. Nachfolgende Ausführungen gelten hierfür analog.

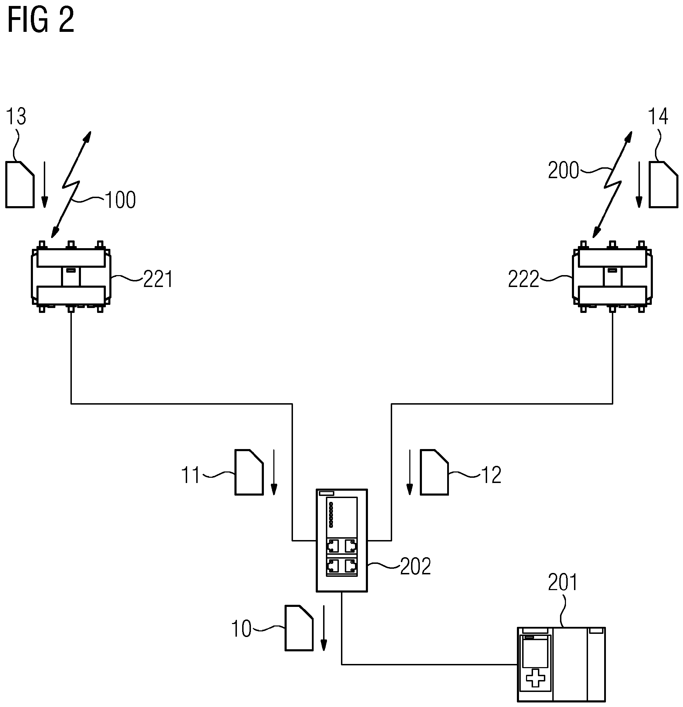

Entsprechend Figur 2 umfasst der zweite Teil des Funk-Kommunikationssystems eine zweite PRP-Redbox 202, die ebenfalls zumindest 3 Kommunikationsnetzanschlüsse aufweist. Die zweite PRP-Redbox 202 ist über ihren ersten und über ihren zweiten Kommunikationsnetzanschluss jeweils mit einer WLAN-Teilnehmerstation 221, 222 verbunden. An einen Interlink-Port, der einen dritten Kommunikationsnetzanschluss der zweiten PRP-Redbox 202 darstellt, ist im vorliegenden Ausführungsbeispiel auf Feldebene ein Sensor- bzw. Aktorsystem 201 eines industriellen Automatisierungssystems angeschlossen. Dieses Sensor- bzw. Aktorsystem 201 kann beispielsweise ein Fertigungsroboter, ein Antrieb für ein Fördersystem, eine Steuerungseinheit für ein Transportsystem oder eine Bedien- und Beobachtungsstation an einer Fertigungslinie sein. Eine erste WLAN-Teilnehmerstation 221 ist im vorliegenden Ausführungsbeispiel über eine erste Funkverbindung 100 mit einer ersten WLAN-Basisstation 141 verbunden, während eine zweite WLAN-Teilnehmerstation 222 über eine zweite Funkverbindung 200 mit einer zweiten WLAN-Basisstation 142 verbunden ist. Für die erste Funkverbindung 100 wird eine erste WLAN-SSID verwendet, während für die zweite Funkverbindung 200 eine zweite WLAN-SSID verwendet wird. Dabei sind die erste WLAN-SSID und die zweite WLAN-SSID voneinander verschieden.

Die erste 102 und zweite PRP-Redbox 202 weisen jeweils eine mit ihren Kommunikationsanschlüssen verbundene Signalverarbeitungseinheit auf, die eine Multiplexereinheit zur parallelen Weiterleitung zu sendender Datenrahmen (Frames) an den jeweiligen ersten und zweiten Kommunikationsnetzanschluss umfasst. Durch eine Multiplexereinheit werden von einem einfach angebundenen Kommunikations- bzw. Automatisierungsgerät 101, wie dem SCADA-System 101, gesendete Datenrahmen 10 dupliziert, so dass zueinander redundante PRP-Datenrahmen 11, 12 mit identischer Quell- und Zieladresse erzeugt werden. Zueinander redundante PRP-Datenrahmen 11, 12 werden durch eine einheitliche Sequenznummer gekennzeichnet, die durch die jeweilige Signalverarbeitungseinheit an redundant zu übermittelnde PRP-Datenrahmen 11, 12 vergeben wird. Die zueinander redundanten PRP-Datenrahmen 11, 12 werden dann von der jeweiligen PRP-Redbox 102, 202 an die Serialisierungseinheit 103 bzw. an die WLAN-Teilnehmerstation 221-222 weitergeleitet.

Darüber hinaus weisen die erste 102 und zweite PRP-Redbox 202 jeweils eine Redundanzbehandlungseinheit zur Verarbeitung vom jeweiligen ersten und zweiten Kommunikationsnetzanschluss empfangener Datenrahmen auf. Die Redundanzbehandlungseinheit ist für eine Detektion und Ausfilterung empfangener redundanter Datenrahmen vorgesehen. Des weiteren ist der jeweiligen Signalverarbeitungseinheit jeweils eine Speichereinheit zugeordnet, die Sequenznummern bereits fehlerfrei empfangener Datenrahmen speichert. Bei Empfang eines neuen Datenrahmens führt die Redundanzbehandlungseinheit eine Überprüfung auf Übereinstimmung mit einer bereits gespeicherten Sequenznummer durch.

Die Serialisierungseinheit 103 ist dafür konfiguriert, Ziel-MAC-Adressen in über einen ersten Kommunikationsnetzanschluss der ersten PRP-Redbox 102 übermittelten PRP-Datenrahmen 11 jeweils durch eine MAC-Adresse der ersten WLAN-Teilnehmerstation 221 zu ersetzen und Ziel-MAC-Adressen in über einen zweiten Kommunikationsnetzanschluss der ersten PRP-Redbox 102 übermittelten PRP-Datenrahmen 12 jeweils durch eine MAC-Adresse der zweiten WLAN-Teilnehmerstation 222 zu ersetzen. Auf diese Weise werden aus den zueinander redundanten PRP-Datenrahmen 11, 12 modifizierte Datenrahmen 13, 14 erzeugt, die sich hinsichtlich ihrer Ziel-MAC-Adressen unterscheiden. Somit können die modifizierten Datenrahmen 13, 14 problemlos entsprechend ihren Ziel-MAC-Adressen durch den Switch 104 an die erste WLAN-Basisstation 141 bzw. an die zweite WLAN-Basisstation 142 weitergeleitet werden, um von dort an die erste WLAN-Teilnehmerstation 221 bzw. an die zweite WLAN-Teilnehmerstation 222 gesendet zu werden. Zur Modifikation der zueinander redundanten PRP-Datenrahmen 11, 12 fügt die Serialisierungseinheit 103 die ersetzten ursprünglichen Ziel-MAC-Adressen als Zusatzinformation in einen PRP-Trailer des jeweiligen modifizierten Datenrahmens 13, 14 ein.

Die MAC-Adressen der WLAN-Teilnehmerstationen 221, 222 werden durch die Serialisierungseinheit 103 im Rahmen eines Aufbaus der ersten Funkverbindung 100 bzw. der zweiten Funkverbindung 200 gelernt. Zunächst werden die MAC-Adressen der WLAN-Teilnehmerstationen 221, 222 in einer der jeweiligen WLAN-Basisstation 141, 142 zugeordneten Source Address Table (SAT) gespeichert. Anschließend können die MAC-Adressen der WLAN-Teilnehmerstationen 221, 222 beispielsweise durch die Serialisierungseinheit 103 aus der jeweiligen Source Address Table ausgelesen werden, oder die WLAN-Basisstationen 141, 142 übermitteln entsprechende Informationen über verbundene WLAN-Teilnehmerstationen an die Serialisierungseinheit 103.

Korrespondierend zur Serialisierungseinheit 103 ist die erste WLAN-Teilnehmerstation 221 dafür konfiguriert, mit ihrer MAC-Adresse übereinstimmende Ziel-MAC-Adressen in über die erste Funkverbindung 100 übermittelten modifizierten Datenrahmen 13 jeweils durch in der Serialisierungseinheit 103 ersetzte ursprüngliche Ziel-MAC-Adressen zu ersetzen. Analog dazu ist die zweite WLAN-Teilnehmerstation 222 dafür konfiguriert, mit ihrer MAC-Adresse übereinstimmende Ziel-MAC-Adressen in über die zweite Funkverbindung 200 übermittelten modifizierten Datenrahmen 14 jeweils durch in der Serialisierungseinheit 103 ersetzte ursprüngliche Ziel-MAC-Adressen zu ersetzen. Dabei ersetzen die erste WLAN-Teilnehmerstation 221 und die zweite WLAN-Teilnehmerstation 222 mit ihrer Adresse übereinstimmende Ziel-MAC Adressen jeweils entsprechend der Zusatzinformation im PRP-Trailer des jeweiligen modifizierten Datenrahmens 13, 14. Auf diese Weise werden die ursprünglichen PRP-Datenrahmen 11, 12 rekonstruiert. Die rekonstruierten PRP-Datenrahmen 11, 12 können anschließend zur Duplikatefilterung an die zweite PRP-Redbox 202 übermittelt werden.

Bei einer Übermittlung redundanter PRP-Datenrahmen von der zweiten PRP-Redbox 202 über die beiden Funkverbindungen 100, 200 an die erste PRP-Redbox 102 werden durch die WLAN-Teilnehmerstationen 221, 222 und durch die Serialisierungseinheit 103 anstelle der Ziel-MAC-Adressen Quell-MAC-Adressen getauscht. Dies bedeutet, dass die WLAN-Teilnehmerstationen 221, 222 Quell-MAC-Adressen in von der zweiten PRP-Redbox 202 empfangenen PRP-Datenrahmen jeweils durch ihre eigene MAC-Adresse ersetzen. Auf diese Weise werden aus den zueinander redundanten PRP-Datenrahmen modifizierte Datenrahmen erzeugt, die sich hinsichtlich ihrer Quell-MAC-Adressen unterscheiden. Somit bleiben in obigen Source Address Tables gespeicherte Adress-Informationen konsistent zur Übermittlung der PRP-Datenrahmen 11, 12 von der ersten PRP-Redbox 102 zur zweiten PRP-Redbox 202.

Zur Modifikation von zueinander redundanten PRP-Datenrahmen fügen die WLAN-Teilnehmerstationen 221, 222 die ersetzten ursprünglichen Quell-MAC-Adressen als Zusatzinformation in einen PRP-Trailer des jeweiligen modifizierten Datenrahmens ein. Korrespondierend dazu ersetzt die Serialisierungseinheit 103 mit den MAC-Adressen der WLAN-Teilnehmerstationen 221, 222 übereinstimmende Quell-MAC-Adressen in über den Switch 104 übermittelten modifizierten Datenrahmen entsprechend den Zusatzinformationen in den PRP-Trailern jeweils durch die ursprünglichen Quell-MAC-Adressen.

Zur besseren Übersichtlichkeit und zum einfacheren Verständnis sind die PRP-Redboxen 102, 202, die Serialisierungseinheit 103 und der Switch 104 im vorliegenden Ausführungsbeispiel jeweils als separate Einheiten dargestellt. Grundsätzlich können die PRP-Redboxen 102, 202, die Serialisierungseinheit 103 bzw. der Switch 104 auch Software-implementierte bzw. virtualisierte Funktionseinheiten einer rechnerbasierten Vorrichtung sein und beispielsweise als Instanzen auf einem Computer ablaufen. Dies gilt insbesondere für eine Zusammenfassung der ersten PRP-Redbox 102, der Serialisierungseinheit 103 und des Switchs 104 in einer gemeinsamen Computereinheit.

Falls auch die zweite PRP-Redbox 202 analog zur ersten PRP-Redbox 102 über einen Switch mit den WLAN-Teilnehmerstationen 221, 222 verbunden ist, wird die zweite PRP-Redbox 202 ebenfalls über eine Serialisierungseinheit mit diesem Switch verbunden. Darüber hinaus sollten in über die Funkverbindungen 100, 200 zu übermittelnden redundanten Datenrahmen sowohl die Ziel-MAC-Adressen als auch die Quell-MAC-Adressen durch die Serialisierungseinheiten ersetzt werden. Damit ist sichergestellt, dass in den Switches über die Funkverbindungen 100, 200 an unterschiedlichen Ports empfangene Datenrahmen, insbesondere nach einer Rekonstruktion ursprünglicher Ziel-MAC-Adressen durch die WLAN-Teilnehmerstationen 221, 222 oder durch die WLAN-Basisstationen 141, 142, stets unterschiedliche Quell-MAC-Adressen aufweisen. Auch bei Verwendung eines gemeinsamen WLAN-Controllers für die WLAN-Teilnehmerstationen 221, 222 sollten sowohl die Ziel-MAC-Adressen als auch die Quell-MAC-Adressen durch Serialisierungseinheiten ersetzt werden.

## Patentansprüche

1. Funk-Kommunikationssystem für ein industrielles Automatisierungssystem mit
- zumindest einem ersten (102) und einem zweiten redundant an ein industrielles Kommunikationsnetz angebundenen Kommunikationsgerät (202) mit jeweils
- zumindest einem ersten und einem zweiten Kommunikationsnetzanschluss und
- einer mit dem ersten und zweiten Kommunikationsnetzanschluss verbundenen Signalverarbeitungseinheit, die eine Multiplexereinheit zur parallelen Weiterleitung zu sendender Datenrahmen an beide Kommunikationsnetzanschlüsse und eine Redundanzbehandlungseinheit zur Verarbeitung von beiden Kommunikationsnetzanschlüssen empfangener Datenrahmen aufweist, wobei die Redundanzbehandlungseinheit für eine Detektion empfangener redundanter Datenrahmen ausgestaltet und eingerichtet ist,
- zumindest einem Netzinfrastrukturgerät (104) mit
- einer Mehrzahl von Kommunikationsnetzanschlüssen und
- einem die Kommunikationsnetzanschlüsse miteinander verbindenden Koppelelement,
**dadurch gekennzeichnet, dass**
- das erste Kommunikationsgerät (102) über seinen ersten und über seinen zweiten Kommunikationsnetzanschluss mit einer Serialisierungseinheit (103) verbunden ist, die über genau eine Leitungsverbindung an das Netzinfrastrukturgerät (104) angeschlossen ist,
- an das Netzinfrastrukturgerät (104) eine erste (141) und eine zweite Funk-Basisstation (142) angeschlossen sind,
- das zweite Kommunikationsgerät (202) über seinen ersten und über seinen zweiten Kommunikationsnetzanschluss mittel- oder unmittelbar mit einer ersten (221) und einer zweiten Funk-Teilnehmerstation (222) verbunden ist,
- die erste Funk-Teilnehmerstation (221) über eine erste Funkverbindung (100) mit der ersten Funk-Basisstation (141) und die zweite Funk-Teilnehmerstation (222) über eine zweite Funkverbindung (200) mit der zweiten Funk-Basisstation (142) verbunden ist,
- die Serialisierungseinheit (103) dafür ausgestaltet und eingerichtet ist,
- Ziel-Adressen in über den ersten Kommunikationsnetzanschluss des ersten Kommunikationsgeräts (102) übermittelten Datenrahmen (11) jeweils durch eine Adresse der ersten Funk-Teilnehmerstation (221) zu ersetzen und
- Ziel-Adressen in über den zweiten Kommunikationsnetzanschluss des ersten Kommunikationsgeräts (102) übermittelten Datenrahmen (12) jeweils durch eine Adresse der zweiten Funk-Teilnehmerstation (222) zu ersetzen,
- die erste Funk-Teilnehmerstation (221) dafür ausgestaltet und eingerichtet ist, mit ihrer Adresse übereinstimmende Ziel-Adressen in über die erste Funkverbindung (100) übermittelten Datenrahmen (13) jeweils durch in der Serialisierungseinheit (103) ersetzte ursprüngliche Ziel-Adressen zu ersetzen,
- die zweite Funk-Teilnehmerstation (222) dafür ausgestaltet und eingerichtet ist, mit ihrer Adresse übereinstimmende Ziel-Adressen in über die zweite Funkverbindung (200) übermittelten Datenrahmen (14) jeweils durch in der Serialisierungseinheit (103) ersetzte ursprüngliche Ziel-Adressen zu ersetzen.

2. Kommunikationssystem nach Anspruch 1,
bei dem die Serialisierungseinheit (103) dafür ausgestaltet und eingerichtet ist, ersetzte ursprüngliche Ziel-Adressen in über den ersten und zweiten Kommunikationsnetzanschluss des ersten Kommunikationsgeräts (102) übermittelten Datenrahmen (11, 12) als Zusatzinformation in einen vorgegebenen Bereich des jeweiligen Datenrahmens einzufügen.

3. Kommunikationssystem nach Anspruch 2,
die erste (221) und die zweite Funk-Teilnehmerstation (222) dafür ausgestaltet und eingerichtet sind, mit ihrer Adresse übereinstimmende Ziel-Adressen in über die erste (100) und zweite Funkverbindung (200) übermittelten Datenrahmen (13, 14) jeweils entsprechend der Zusatzinformation im vorgegebenen Bereich des jeweiligen Datenrahmens durch die ursprüngliche Ziel-Adresse zu ersetzen.

4. Kommunikationssystem nach einem der Ansprüche 1 bis 3,
bei dem zueinander redundante Datenrahmen durch eine einheitliche Sequenznummer gekennzeichnet sind und bei dem die Signalverarbeitungseinheiten des ersten und des zweiten Kommunikationsgeräts für eine Vergabe von Sequenznummern an redundant zu übermittelnde Datenrahmen ausgestaltet und eingerichtet sind.

5. Kommunikationssystem nach Anspruch 4,
bei dem eine Übertragung redundant zu übermittelnder Datenrahmen entsprechend dem Parallel Redundancy Protocol erfolgt.

6. Kommunikationssystem nach Anspruch 5,
bei dem die Serialisierungseinheit (103) dafür ausgestaltet und eingerichtet ist, ersetzte ursprüngliche Ziel-Adressen in über den ersten und zweiten Kommunikationsnetzanschluss des ersten Kommunikationsgeräts (102) übermittelten Datenrahmen (11, 12) als Zusatzinformation in einen PRP-Trailer des jeweiligen Datenrahmens einzufügen.

7. Kommunikationssystem nach Anspruch 6,
die erste (221) und die zweite Funk-Teilnehmerstation (222) dafür ausgestaltet und eingerichtet sind, mit ihrer Adresse übereinstimmende Ziel-Adressen in über die erste (100) und zweite Funkverbindung (200) übermittelten Datenrahmen (13, 14) jeweils entsprechend der Zusatzinformation im PRP-Trailer des jeweiligen Datenrahmens durch die ursprüngliche Ziel-Adresse zu ersetzen.

8. Kommunikationssystem nach einem der Ansprüche 5 bis 7,
bei dem das erste (102) und zweite Kommunikationsgerät (202) eine PRP-Redbox sind und bei dem über das erste und zweite Kommunikationsgerät jeweils ein einfach angebundenes Kommunikationsgerät (101, 201) mit dem industriellen Kommunikationsnetz verbunden ist.

9. Kommunikationssystem nach einem der Ansprüche 1 bis 8,
bei dem die Funk-Teilnehmerstationen und die Funk-Basisstationen zumindest einem Wireless Local Area Network, einem WiMAX-, einem UMTS-, einem LTE-Mobilfunknetz oder einem sonstigen Mobilfunknetz zugeordnet sind.

10. Kommunikationssystem nach einem der Ansprüche 1 bis 9,
bei dem das erste Kommunikationsgerät, das zweite Kommunikationsgerät, das Netzinfrastrukturgerät und/oder die Serialisierungseinheit Software-implementierte und/oder virtualisierte Funktionseinheiten einer rechnerbasierten Vorrichtung sind.

11. Verfahren zum Betrieb eines Funk-Kommunikationssystems für ein industrielles Automatisierungssystem, bei dem
- zumindest ein erstes und ein zweites Kommunikationsgerät redundant an ein industrielles Kommunikationsnetz angebunden werden, wobei das erste und zweite Kommunikationsgerät jeweils
- zumindest einen ersten und einen zweiten Kommunikationsnetzanschluss und
- eine mit dem ersten und zweiten Kommunikationsnetzanschluss verbundene Signalverarbeitungseinheit aufweisen, die zu sendende Datenrahmen parallel an beide Kommunikationsnetzanschlüsse weiterleitet und von beiden Kommunikationsnetzanschlüssen empfangene redundante Datenrahmen detektiert,
- zumindest ein Netzinfrastrukturgerät mit
- einer Mehrzahl von Kommunikationsnetzanschlüssen und
- einem die Kommunikationsnetzanschlüsse miteinander verbindenden Koppelelement vorgesehen ist,
**dadurch gekennzeichnet, dass**
- das erste Kommunikationsgerät über seinen ersten und über seinen zweiten Kommunikationsnetzanschluss mit einer Serialisierungseinheit verbunden ist, die über genau eine Leitungsverbindung an das Netzinfrastrukturgerät angeschlossen ist,
- an das Netzinfrastrukturgerät eine erste und eine zweite Funk-Basisstation angeschlossen sind,
- das zweite Kommunikationsgerät über seinen ersten und über seinen zweiten Kommunikationsnetzanschluss mittel-oder unmittelbar mit einer ersten und einer zweiten Funk-Teilnehmerstation verbunden ist,
- die erste Funk-Teilnehmerstation über eine erste Funkverbindung mit der ersten Funk-Basisstation und die zweite Funk-Teilnehmerstation über eine zweite Funkverbindung mit der zweiten Funk-Basisstation verbunden ist,
- die Serialisierungseinheit
- Ziel-Adressen in über den ersten Kommunikationsnetzanschluss des ersten Kommunikationsgeräts übermittelten Datenrahmen jeweils durch eine Adresse der ersten Funk-Teilnehmerstation ersetzt und
- Ziel-Adressen in über den zweiten Kommunikationsnetzanschluss des ersten Kommunikationsgeräts übermittelten Datenrahmen jeweils durch eine Adresse der zweiten Funk-Teilnehmerstation ersetzt,
- die erste Funk-Teilnehmerstation mit ihrer Adresse übereinstimmende Ziel-Adressen in über die erste Funkverbindung übermittelten Datenrahmen jeweils durch in der Serialisierungseinheit ersetzte ursprüngliche Ziel-Adressen ersetzt,
- die zweite Funk-Teilnehmerstation mit ihrer Adresse übereinstimmende Ziel-Adressen in über die zweite Funkverbindung übermittelten Datenrahmen jeweils durch in der Serialisierungseinheit ersetzte ursprüngliche Ziel-Adressen ersetzt.

12. Verfahren nach Anspruch 11,
bei dem die Serialisierungseinheit ersetzte ursprüngliche Ziel-Adressen in über den ersten und zweiten Kommunikationsnetzanschluss des ersten Kommunikationsgeräts übermittelten Datenrahmen als Zusatzinformation in einen vorgegebenen Bereich des jeweiligen Datenrahmens einfügt.

13. Verfahren nach Anspruch 12,
die erste und die zweite Funk-Teilnehmerstation mit ihrer Adresse übereinstimmende Ziel-Adressen in über die erste und zweite Funkverbindung übermittelten Datenrahmen jeweils entsprechend der Zusatzinformation im vorgegebenen Bereich des jeweiligen Datenrahmens durch die ursprüngliche Ziel-Adresse ersetzen.

14. Verfahren nach einem der Ansprüche 1 bis 13,
bei dem zueinander redundante Datenrahmen durch eine einheitliche Sequenznummer gekennzeichnet werden und bei dem die Signalverarbeitungseinheiten des ersten und des zweiten Kommunikationsgeräts Sequenznummern an redundant zu übermittelnde Datenrahmen vergeben.

15. Verfahren nach Anspruch 14,
bei dem redundant zu übermittelnde Datenrahmen entsprechend dem Parallel Redundancy Protocol übertragen werden.

16. Verfahren nach Anspruch 15,
bei dem die Serialisierungseinheit ersetzte ursprüngliche Ziel-Adressen in über den ersten und zweiten Kommunikationsnetzanschluss des ersten Kommunikationsgeräts übermittelten Datenrahmen als Zusatzinformation in einen PRP-Trailer des jeweiligen Datenrahmens einfügt.

17. Verfahren nach Anspruch 16,
die erste und die zweite Funk-Teilnehmerstation mit ihrer Adresse übereinstimmende Ziel-Adressen in über die erste und zweite Funkverbindung übermittelten Datenrahmen jeweils entsprechend der Zusatzinformation im PRP-Trailer des jeweiligen Datenrahmens durch die ursprüngliche Ziel-Adresse ersetzen.

## Claims

1. Radio communication system for an industrial automation system comprising
- at least one first (102) and one second communication device (202) linked redundantly to an industrial communication network, comprising in each case
- at least one first and one second communication network terminal and
- one signal processing unit connected to the first and second communication network terminal, which has a multiplexer unit for parallel forwarding of data frames to be sent to both communication network terminals and a redundancy treatment unit for processing data frames received by both communication network terminals, wherein the redundancy treatment unit is designed and configured for a detection of received redundant data frames,
- at least one network infrastructure device (104) comprising
- a plurality of communication network terminals and
- one coupling element connecting the communication network terminals to one another,
**characterized in that**
- the first communication device (102) is connected via its first and via its second communication network terminal to a serialization unit (103) which is connected to the network infrastructure device (104) via exactly one line connection,
- a first (141) and a second radio base station (142) are connected to the network infrastructure device (104),
- the second communication device (202) is connected via its first and via its second communication network terminal indirectly or directly to a first (221) and a second radio subscriber station (222),
- the first radio subscriber station (221) is connected to the first radio base station (141) via a first radio link (100) and the second radio subscriber station (222) is connected to the second radio base station (142) via a second radio link (200),
- the serialization unit (103) is designed and configured
- to replace destination addresses in data frames (11) conveyed via the first communication network terminal of the first communication device (102) in each case with an address of the first radio subscriber station (221) and
- to replace destination addresses in data frames (12) conveyed via the second communication network terminal of the first communication device (102) in each case with an address of the second radio subscriber station (222),
- the first radio subscriber station (221) is designed and configured to replace destination addresses corresponding to its address in data frames (13) conveyed via the first radio link (100) in each case with original destination addresses replaced in the serialization unit (103),
- the second radio subscriber station (222) is designed and configured to replace destination addresses corresponding to its address in data frames (14) conveyed via the second radio link (200) in each case with original destination addresses replaced in the serialization unit (103).

2. Communication system according to Claim 1,
in which the serialization unit (103) is designed and configured to insert replaced original destination addresses in data frames (11, 12) conveyed via the first and second communication network terminal of the first communication device (102) as additional information into a predetermined area of the respective data frame.

3. Communication system according to Claim 2,
in which the first (221) and the second radio subscriber station (222) are designed and configured to replace destination addresses corresponding to their address in data frames (13, 14) conveyed via the first (100) and second radio link (200) in each case in accordance with the additional information in the predetermined area of the respective data frame with the original destination address.

4. Communication system according to one of Claims 1 to 3,
in which mutually redundant data frames are identified by a uniform sequence number and in which the signal processing units of the first and of the second communication device are designed and configured for sequence numbers to be issued to data frames to be conveyed redundantly.

5. Communication system according to Claim 4,
in which a transmission of data frames to be conveyed redundantly takes place in accordance with the Parallel Redundancy Protocol.

6. Communication system according to Claim 5,
in which the serialization unit (103) is designed and configured to insert replaced original destination addresses in data frames (11, 12) conveyed via the first and second communication network terminal of the first communication device (102) as additional information into a PRP trailer of the respective data frame.

7. Communication system according to Claim 6,
in which the first (221) and the second radio subscriber station (222) are designed and configured to replace destination addresses corresponding to their address in data frames (13, 14) conveyed via the first (100) and second radio link (200) in each case in accordance with the information in the PRP trailer of the respective data frame with the original destination address.

8. Communication system according to one of Claims 5 to 7,
in which the first (102) and second communication device (202) are a PRP Redbox, and in which in each case a communication device (101, 201) which is simply connected is connected to the industrial communication network via the first and second communication device.

9. Communication system according to one of Claims 1 to 8,
in which the radio subscriber stations and the radio base stations are allocated to at least one Wireless Local Area Network, one WiMAX, one UMTS, one LTE mobile radio network or another mobile radio network.

10. Communication system according to one of Claims 1 to 9,
in which the first communication device, the second communication device, the network infrastructure device and/or the serialization unit are software-implemented and/or virtualized functional units of a computer-based device.

11. Method for operating a radio communication system for an industrial automation system in which
- at least one first and one second communication device are linked redundantly to an industrial communication network, wherein the first and second communication device have in each case
- at least one first and one second communication network terminal and
- one signal processing unit connected to the first and second communication network terminal, which forwards the data frames to be sent in parallel to both communication network terminals and detects redundant data frames received by both communication network terminals,
- at least one network infrastructure device is provided with
- a plurality of communication network terminals and
- one coupling element connecting the communication network terminals to one another,
**characterized in that**
- the first communication device is connected via its first and via its second communication network terminal to a serialization unit which is connected to the network infrastructure device via exactly one line connection,
- a first and a second radio base station are connected to the network infrastructure device,
- the second communication device is connected via its first and via its second communication network terminal indirectly or directly to a first and a second radio subscriber station,
- the first radio subscriber station is connected to the first radio base station via a first radio link and the second radio subscriber station is connected to the second radio base station via a second radio link,
- the serialization unit
- replaces destination addresses in data frames conveyed via the first communication network terminal of the first communication device in each case with an address of the first radio subscriber station, and
- replaces destination addresses in data frames conveyed via the second communication network terminal of the first communication device in each case with an address of the second radio subscriber station,
- the first radio subscriber station replaces destination addresses corresponding to its address in data frames conveyed via the first radio link in each case with original destination addresses replaced in the serialization unit,
- the second radio subscriber station replaces destination addresses corresponding to its address in data frames conveyed via the second radio link in each case with original destination addresses replaced in the serialization unit.

12. Method according to Claim 11,
in which the serialization unit inserts replaced original destination addresses in data frames conveyed via the first and second communication network terminal of the first communication device as additional information into a predetermined area of the respective data frame.

13. Method according to Claim 12,
in which the first and the second radio subscriber stations replace destination addresses corresponding to their address in data frames conveyed via the first and second radio link in each case in accordance with the additional information in the predetermined area of the respective data frame with the original destination address.

14. Method according to one of Claims 1 to 13,
in which mutually redundant data frames are **characterized by** a uniform sequence number and in which the signal processing units of the first and of the second communication device issue sequence numbers to data frames to be conveyed redundantly.

15. Method according to Claim 14,
in which data frames to be conveyed redundantly are transmitted in accordance with the Parallel Redundancy Protocol.

16. Method according to Claim 15,
in which the serialization unit inserts replaced original destination addresses in data frames conveyed via the first and second communication network terminal of the first communication device as additional information into a PRP trailer of the respective data frame.

17. Method according to Claim 16,
in which the first and the second radio subscriber stations replace destination addresses corresponding to their address in data frames conveyed via the first and second radio link in each case in accordance with the additional information in the PRP trailer of the respective data frame with the original destination address.

## Revendications

1. Système de communication radioélectrique d'un système d'automatisation industriel, comprenant
- au moins un premier (102) et un deuxième appareil (202) de communication, rattachés de manière redondante à un réseau de communication industriel et ayant chacun
- au moins un premier et un deuxième accès au réseau de communication et
- une unité du traitement du signal, qui est reliée au premier et au deuxième accès au réseau de communication et qui a une unité de multiplexeur pour l'acheminement en parallèle de trames de données à envoyer aux deux accès au réseau de communication et une unité de traitement de redondance pour le traitement de trames de données reçues par les deux accès au réseau de communication, l'unité de traitement de redondance étant conformée et conçue pour une détection de trames de données redondantes reçues,
- au moins un appareil (104) d'infrastructure de réseau, comprenant
- une pluralité d'accès au réseau de communication et
- un élément de couplage reliant entre eux les accès au réseau de communication,
**caractérisé en ce que**
- le premier appareil (102) de communication est relié par son premier et par son deuxième accès au réseau de communication à une unité (103) de sérialisation, qui est raccordée à l'appareil (104) d'infrastructure de réseau par exactement une liaison par ligne,
- un premier (141) et un deuxième poste de base (142) radioélectrique sont raccordés à l'appareil (104) d'infrastructure de réseau,
- le deuxième appareil (202) de communication est relié, indirectement ou directement à un premier (221) et à un deuxième poste (222) de participant radioélectrique par son premier et par son deuxième accès au réseau de communication,
- le premier poste (221) de participant radioélectrique est relié par une première liaison (100) radioélectrique au premier poste (141) de base radioélectrique et le deuxième poste (222) de participant radioélectrique par une deuxième liaison (200) radioélectrique au deuxième poste (142) de base radioélectrique,
- l'unité (103) de sérialisation est conformée et conçue pour
- remplacer, par une adresse du premier poste (221) de participant radioélectrique, des adresses cibles dans des trames (11) de données transmises par le premier accès au réseau de communication du premier appareil (102) de communication et
- remplacer, par une adresse du deuxième poste (222) de participant radioélectrique, des adresses cibles dans des trames (12) de données transmises par le deuxième accès au réseau de communication du premier appareil (102) de communication,
- le premier poste (221) de participant radioélectrique est conformé et conçu pour remplacer des adresses cibles, coïncidant par leurs adresses dans des trames (13) de données transmises par la première liaison (100) radioélectrique, respectivement par des adresses cibles d'origine remplacées dans l'unité (103) de sérialisation,
- le deuxième poste (222) de participant radioélectrique est conformé et conçu pour remplacer des adresses cibles, coïncidant par leurs adresses dans des trames (14) de données transmises par la deuxième liaison (200) radio, respectivement par des adresses cibles d'origine remplacées dans l'unité (103) de sérialisation.

2. Système de communication suivant la revendication 1,
dans lequel l'unité (103) de sérialisation est conformée et conçue pour ajouter, comme information supplémentaire dans une partie donnée à l'avance de la trame de données respective, des adresses cibles d'origine remplacées dans des trames (11, 12) de données transmises par le premier et le deuxième accès au réseau de communication du premier appareil (102) de communication.

3. Système de communication suivant la revendication 2,
le premier (221) et le deuxième poste (222) de participant radioélectrique sont conformés et conçus pour remplacer, par les adresses cibles d'origine, dans la partie donnée à l'avance de la trame de données respective, des adresses cibles coïncidant par leurs adresses dans des trames (13, 14) de données transmises par la première (100) et la deuxième liaisons (200) radioélectriques.

4. Système de communication suivant l'une des revendications 1 à 3,
dans lequel des trames de données redondantes les unes par rapport aux autres sont **caractérisées par** un numéro de séquence unitaire et dans lequel les unités de traitement du signal du premier et du deuxième appareils de communication sont conformées et conçues pour attribuer des numéros de séquence à des trames de données à transmettre de manière redondante.

5. Système de communication suivant la revendication 4,
dans lequel une transmission de trames de données à transmettre de manière redondante s'effectue conformément au parallèle redundancy protocol.

6. Système de communication suivant la revendication 5,
dans lequel l'unité (103) de sérialisation est conformée et conçue pour ajouter, comme information supplémentaire, dans un trailer PRP de la trame de données respective, des adresses cibles d'origine remplacées dans des trames (11, 12) de données transmises par le premier et le deuxième accès au réseau de communication du premier appareil (102) de communication.

7. Système de communication suivant la revendication 6,
le premier (221) et le deuxième poste (222) de participant radioélectrique sont conformés et conçus pour remplacer, par les adresses cibles d'origine, respectivement conformément à l'information supplémentaire dans le trailer PRP de la trame de données respective, des adresses cibles coïncidant par leurs adresses dans des trames (13, 14) de données transmises par la première (100) et la deuxième liaisons (200) radioélectriques.

8. Système de communication suivant l'une des revendications 5 à 7,
dans lequel le premier (102) et le deuxième appareils (202) de communication sont une redbox PRP et dans lequel, respectivement, un appareil (101, 201) de communication rattaché de manière simple est relié au réseau de communication industriel par le premier et le deuxième appareils de communication.

9. Système de communication suivant l'une des revendications 1 à 8,
dans lequel les postes de participant radioélectriques et les postes de base radioélectriques sont associés au moins à un Wireless Local Area Network, un réseau radioélectrique mobile WiMAX, un réseau radioélectrique mobile UMTS, un réseau radioélectrique mobile LTE ou un autre réseau radioélectrique mobile.

10. Système de communication suivant l'une des revendications 1 à 9,
dans lequel le premier appareil de communication, le deuxième appareil de communication, l'appareil d'infrastructure de réseau et/ou l'unité de sérialisation sont des unités fonctionnelles mises en oeuvre par logiciel et/ou virtualisées d'un système informatique.

11. Procédé pour faire fonctionner un système de communication radioélectrique d'un système d'automatisation industriel, dans lequel
- on rattache au moins un premier et un deuxième appareils de communication de manière redondante à un réseau de communication industriel, le premier et le deuxième appareil de communication ayant chacun
- au moins un premier et un deuxième accès au réseau de communication et
- une unité du traitement du signal, qui est reliée au premier et au deuxième accès au réseau de communication, qui achemine les trames de données à envoyer en parallèle aux deux accès au réseau de communication et qui détecte des trames de données redondantes reçues par les deux accès au réseau de communication,
- au moins un appareil d'infrastructure de réseau pourvu
- d'une pluralité d'accès au réseau de communication et
- d'un élément de couplage reliant entre eux les accès au réseau de communication,
**caractérisé en ce que**
- le premier appareil de communication est relié par son premier et par son deuxième accès au réseau de communication à une unité de sérialisation, qui est raccordée à l'appareil d'infrastructure de réseau par exactement une liaison par ligne,
- un premier et un deuxième poste de base radioélectrique sont raccordés à l'appareil d'infrastructure de réseau,
- le deuxième appareil de communication est relié, indirectement ou directement à un premier et à un deuxième postes de participant radioélectrique par son premier et par son deuxième accès au réseau de communication,
- le premier poste de participant radioélectrique est relié par une première liaison radioélectrique au premier poste de base radioélectrique et le deuxième poste de participant radioélectrique par une deuxième liaison radioélectrique au deuxième poste de base radioélectrique,
- l'unité de sérialisation
- remplace, respectivement, par une adresse du premier poste de participant radioélectrique, des adresses cibles dans des trames de données transmises par le premier accès au réseau de communication du premier appareil de communication et
- remplace, respectivement, par une adresse du deuxième poste de participant radioélectrique, des adresses cibles dans des trames de données transmises par le deuxième accès au réseau de communication du premier appareil de communication,
- le premier poste de participant radioélectrique remplace, respectivement, par des adresses cibles d'origine remplacées dans l'unité de sérialisation, des adresses cibles coïncidant par leurs adresses dans des trames de données transmises par la première liaison radioélectrique,
- le deuxième poste de participant radioélectrique remplace, respectivement, par des adresses cibles d'origine remplacées dans l'unité de sérialisation, des adresses cibles coïncidant par leurs adresses dans des trames de données transmises par la deuxième liaison radioélectrique.

12. Procédé suivant la revendication 11,
dans lequel l'unité de sérialisation ajoute, comme information supplémentaire dans une partie donnée à l'avance de la trame de donnée respective, des adresses cibles d'origine remplacées dans des trames de données transmises par le premier et le deuxième accès de réseau de communication du premier appareil de communication.

13. Procédé suivant la revendication 12,
le premier et le deuxième postes de participant radioélectrique remplace, dans la partie donnée à l'avance de la trame de données, conformément à l'information supplémentaire, par l'adresse cible d'origine, des adresses cibles coïncidant par leurs adresses dans des trames de données transmises par la premier et la deuxième liaisons radioélectriques.

14. Procédé suivant l'une des revendications 1 à 13,
dans lequel on caractérise des trames de données redondantes les unes avec les autres, par un numéro de séquence unitaire et dans lequel les unités de traitement du signal du premier et du deuxième appareils de communications attribuent des numéros de séquence à des trames de données à transmettre de manière redondante.

15. Procédé suivant la revendication 14,
dans lequel on transmet les trames de données à transmettre de manière redondante, conformément au parallel redundancy protocol.

16. Procédé suivant la revendication 15,
dans lequel l'unité de sérialisation ajoute, comme information supplémentaire dans un trailer PRP de la trame de données respective, des adresses cibles d'origine remplacées dans des trames de données transmises par le premier et le deuxième accès au réseau de communication du premier appareil de communication.

17. Procédé suivant la revendication 16,
le premier et le deuxième postes de participant radioélectrique remplace, conformément à l'information supplémentaire dans le trailer PRP de la trame de données respective, par les adresses cibles d'origine, des adresses cibles coïncidant par leurs adresses dans des trames de données transmises par la premier et la deuxième liaisons radioélectriques.
